# EUROPEAN PATENT APPLICATION

(11) **EP 0 926 493 A2**
(43) Date of publication of application: **30.06.1999**
(21) Application number: 98310596.6
(22) Date of filing: 22.12.1998
(51) Int. Cl.: G01N 31/16

(54) **Analytical reagent**

(30) Priority: 24.12.1997 GB 9727168
(71) Applicant: Fisher Scientific U.K. Limited, Loughborough, Leicestershire LE11 5RG (GB)
(72) Inventor: Verity,Ian Cristopher, Loughborough, Leicestershire LE11 5RG (GB); Wilson,Stefan Mark, Markfield, Leicestershire LE67 9WZ (GB)
(74) Representative: Jones, Stephen Anthony

(57) **Abstract**

A reagent for use in the Karl Fischer procedure for water determination comprises a lithium salt of the general formula I: 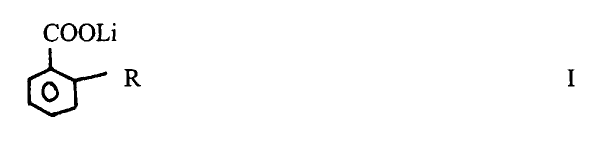 in which R represents hydrogen or lower alkyl.

## Description

This invention relates to an analytical reagent, and in particular to a reagent for use in the Karl Fischer procedure for the determination of moisture.

The Karl Fischer method for the determination of water is well known and is particularly useful in the determination of small quantities of water in liquids and volatile solids. The conventional Karl Fischer reagent comprises iodine and sulphur dioxide in pyridine/methanol solution. Whilst this reagent has been widely used for many years with great success, it does suffer from a number of disadvantages. These include notably disadvantages associated with the presence of pyridine, which is malodourous and unpleasant to work with, as well as being known to be carcinogenic.

For these reasons, there have been attempts to develop alternative Karl Fischer reagents which do not include pyridine. In one such approach, described in US Patent No 4416997, the pyridine is replaced by an alkali metal or alkaline earth metal berzoate or ammonia. The only alkali metals which are mentioned are sodium and potassium, and sodium berzoate is the only benzoate specifically exemplified. The present applicant has found that the use of sodium benzoate is accompanied by deposition of a coating on the electrode of the titration apparatus which is commonly used in the procedure, with a consequential deleterious effect on the function of the electrode. In addition, the solubility of the sodium benzoate is less than would be desired, which limits the buffering power which can be achieved.

There has now been devised an improved form of Karl Fischer reagent which overcomes or substantially mitigates the above mentioned disadvantages.

According to the invention, an analytical reagent for use in the Karl Fischer procedure comprises a lithium salt of the general formula I: 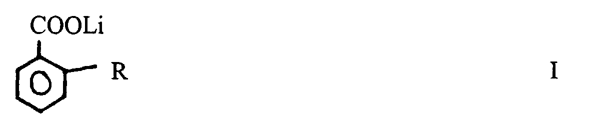 in which R represents hydrogen or lower alkyl.

The reagent according to the invention is advantageous primarily in that it can be used in the Karl Fischer procedure for the determination of low quantities of water in liquids or solid material, yet does not necessitate the use of noxious pyridine. The lithium salt which is utilised as substitute for the pyridine of the conventional Karl Fischer reagent does not have the toxicity or unpleasantness of pyridine. Furthermore, the use of the lithium salt of the present invention does not lead to the problems of electrode deposition encountered when sodium benzoate is used.

By the term "lower alkyl" is meant an alkyl group comprising from one to six carbon atoms. Lithium salts are preferred in which R represents lower alkyl, especially the lower homologues of lower alkyl, ie methyl or ethyl. The particularly preferred lithium salt is that in which R represents methyl, ie lithium o-toluate.

Apart from the use of the lithium salt in place of pyridine, the remaining components of the reagent may be generally similar to the conventional Karl Fischer reagent. The reagent may be made up in any suitable solvent. Amongst solvents known to be suitable for use in a Karl Fischer reagent are the alcohols and/or glycols, particularly lower alcohols (ie alcohols of one to six carbon atoms) such as methanol, ethanol, propanol etc, as well as ethylene glycol and ethylene glycol monoalkyl ethers. Mixed solvents may be used. The preferred solvents are the lower alcohols, in particular methanol.

The reagent according to the invention will also comprise iodine and a reducing agent, most commonly sulfur dioxide. The reagent may be made up as a one-component system or as a two-component system. In a one-component system, the lithium salt, iodine and reducing agent are dissolved in the solvent, eg methanol. In a two-component system, separate titrant and solvent compositions are prepared, the titrant comprising a solution of iodine in the solvent and the solvent composition comprising the lithium salt and reducing agent in the solvent. The same solvent is most preferably used for both the titrant composition and the solvent composition, but different solvents may be used if desired.

Another aspect of the present invention provides a method for the determination of water which method is conducted by the Karl Fischer method but using the reagent of the present invention in place of a conventional Karl Fischer reagent.

The method involves titration, which is normally carried out with the exclusion of atmospheric moisture. The iodine-containing Karl Fischer reagent is added to a solution containing the sample under analysis. The added iodine appears brown, but the brown colour disappears over the course of a few seconds as the iodine is used up by water present in the sample. When the water is exhausted, a brown or yellow colour persists. The colour change from colourless to brown or yellow can be taken as a visual indication of the end point. For greater accuracy, the end point of the titration can be determined photometrically or electrometrically. Electrometric titration is preferred, particularly where the solution to be analyzed has a strong colour which would make precise visual or photometric determination of the end point difficult or impossible. Commonly, a pair of electrodes are inserted in the solution and a constant voltage (perhaps between 10 and 500mV) is applied between them. In the absence of free iodine in the solution the cathodic reaction (reduction of iodine to iodide) is not possible. The cathode is said to be "polarized" and no current flows. However, once the end point is reached free iodine is present, and the current increases suddenly.

Analytical reagents according to the invention will now be described in greater detail, by way of illustration only, with reference to the following Examples.

### Example 1

### One-Component Reagent

| | |
|---|---|
| Lithium ortho-toluate | 1.5 mol |
| Iodine | 0.85 mol |
| Sulfur dioxide | 2.2 mol |
| Methanol | 1 litre |
| Solvent (working medium) | Methanol |

The reagent is prepared as follows:
a) Methanol is gassed with sulfur dioxide.
b) Lithium o-toluate is added and dissolved.
c) Iodine is added and dissolved.

### Example 2

### Two-Component Reagent

### a) Titrant composition

| | |
|---|---|
| Iodine | 0.7 mol |
| Methanol | 1 litre |

### b) Solvent composition

| | |
|---|---|
| Lithium ortho-toluate | 2.4 mol |
| Sulfur dioxide | 1.2 mol |
| Methanol | 1 litre |

The solvent composition is prepared in a similar fashion to the one-component reagent of Example 1, with the omission of the iodine. The titrant composition is prepared by dissolving iodine in methanol.

## Claims

1. An analytical reagent for use in the Karl Fischer procedure, comprising a lithium salt of the general formula I:

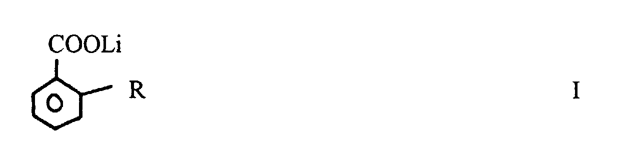

2. A reagent as claimed in claim 1, wherein R represents lower alkyl.

3. A reagent as claimed in claim 1, wherein R represents methyl or ethyl.

4. A reagent as claimed in claim 1, wherein R represents methyl.

5. A reagent as claimed in any preceding claim which further comprises iodine and a reducing agent.

6. A reagent as claimed in claim 5, wherein the reducing agent is sulfur dioxide.

7. A reagent as claimed in any preceding claim, which is a solution in a solvent selected from the group consisting of lower alcohols, ethylene glycol, ethylene glycol monoalkyl ethers and mixtures thereof.

8. A reagent as claimed in any one of claims 1 to 6, which is formulated as two components:
a) a titrant composition comprising a solution of iodine in a solvent, and
b) a solvent composition comprising a solution of the compound of formula I and a reducing agent in a solvent.

9. A reagent as claimed in claim 7 or claim 8, wherein the solvent is methanol.

10. A method for the Karl Fischer determination of water, which method utilises a reagent as claimed in any preceding claim.
